# EUROPÄISCHE PATENTSCHRIFT

(11) **EP 1 862 664 B1**
(45) Veröffentlichungstag und Bekanntmachung des Hinweises auf die Patenterteilung: **25.03.2009**
(21) Anmeldenummer: 07009362.0
(22) Anmeldetag: 10.05.2007
(51) Int. Cl.: F02M 37/00, F16K 15/14, B60K 15/077

(54) **Pilzventil**
Mushroom valve
Soupape-champignon

(30) Priorität: 31.05.2006 DE 102006025310; 03.06.2006 DE 102006026135
(43) Veröffentlichungstag der Anmeldung: 05.12.2007
(73) Patentinhaber: GM Global Technology Operations, Inc., Detroit, MI 48265-3000 (US)
(72) Erfinder: Bleuel, Walter, 65719 Hofheim (DE)
(74) Vertreter: Strauss, Peter

(56) Entgegenhaltungen:
- WO-A-20/05017340
- DE-A1- 10 328 206
- JP-A- 10 325 474
- US-A1- 2002 121 300

## Beschreibung

Die Erfindung betrifft ein Pilzventil, das zum Abdichten eines Flüssigkeitsbehälters geeignet ist, wobei die im Flüssigkeitsbehälter enthaltene Flüssigkeit feste Verunreinigungen wie beispielsweise Körner enthält. Weiterhin betrifft die Erfindung einen Beruhigungstopf für den Kraftstoffbehälter eines Kraftfahrzeugs.

Pilzventile sind allgemein bekannt. Derartige Ventile besitzen einen länglichen Schaft mit einem damit verbundenen Ventilschirm. Bei einem Blick in Richtung des Schafts ist der aus einem elastischen Material bestehende Ventilschirm zumeist konzentrisch zum Schaft angeordnet.

Pilzventile werden unter anderem in Kraftstoffbehältern für Kraftfahrzeuge eingesetzt. Kraftstoffbehälter besitzen nämlich oft einen in ihrem Inneren angeordneten Beruhigungstopf, auch Schwalltopf genannt, von dem aus während des Fahrbetriebs Kraftstoff zum Verbrennungsmotor gefördert wird. Um den Kraftstoff zum Motor fördern zu können, muss er vorher vom restlichen Teil des Kraftstoffbehälters, auch Haupttank genannt, in den Beruhigungstopf gepumpt werden. Hierbei passiert er eine Durchlassöffnung zwischen Haupttank und Beruhigungstopf, in dem sich meist ein Pilzventil befindet. Beim Einströmen von Kraftstoff in den Beruhigungstopf wird das Pilzventil angehoben und kann Kraftstoff in den Beruhigungstopf strömen. Ist der Kraftstoffspiegel im Beruhigungstopf höher als im Haupttank, sorgt der auf dem Pilzventil wirkende hydrostatische Druck dafür, dass kein Kraftstoff in den Haupttank zurückfließen kann. Dies geschieht dadurch, dass der Kraftstoff den Abdichtrand des Ventilschirms, der insofern auch als Dichtlippe angesehen werden kann, gegen den Boden des Beruhigungstopfs drückt, wodurch die besagte Einlass- bzw. Auslassöffnung verschlossen wird.

Die JP 10325474 A beschreibt ein Pilzventil mit einer an der Schirmunterseite angeordneten Dichtlippe. Die Dichtlippe soll eine Beschädigung des Ventilschirms am Rand einer Einströmöffnung verhindern.

Aspekte der Erfindung beziehen sich auf ein Pilzventil und auf einen Beruhigungstopf für einen Kraftstoffbehälter. Es ist eine Aufgabe einer Ausführungsform der Erfindung, ein Pilzventil bereitzustellen, das für den Fall, dass in einer Flüssigkeit, dessen Strömen festgelegt werden soll, feste Bestandteile enthalten sind, eine verbesserte Dichtigkeit zeigt.

Diese Aufgabe wird durch die Merkmale des unabhängigen Anspruchs gelöst. Vorteilhafte Weiterbildungen werden durch die Merkmale der abhängigen Ansprüche wiedergegeben.

Ein erster Aspekt der Erfindung bezieht sich auf ein Pilzventil. Eine erste Ausführungsform des Pilzventils umfasst einen Ventilschirm mit einem damit verbundenen Schaft. Der Ventilschirm besitzt auf seiner Unterseite zwischen dem Schaft und dem Abdichtrand mindestens eine Dichtlippe, wobei die Elastizität des Ventilschirms derart gewählt ist, dass die Dichtlippe vom benachbarten umlaufenden Abdichtrand des Ventilschirms und/oder von einer benachbarten Dichtlippe elastisch entkoppelt ist.

Die Dichtlippe sorgt für eine erhöhte Dichtigkeit des Pilzventils in denjenigen Fällen, in denen unter dem Abdichtrand feste Bestandteile wie zum Beispiel Sandkörnchen und dergleichen zu liegen kommen. In solchen Fällen können die festen Bestandteile dazu führen, dass der Abdichtrand des aus einem elastischen Material bestehenden Ventilschirms partiell angehoben wird und eine Leckstelle entsteht. In einem solchen Fall gewährleistet die ausgebildete Dichtlippe die Dichtigkeit des Pilzventils.

Die elastische Entkopplung gewährleistet, dass das oben genannte Anheben einer Dichtlippe oder des Abdichtrandes durch feste Bestandteile nicht dazu führt, dass die benachbarte Dichtlippe ebenfalls angehoben und damit eine weitere Dichtungsstelle außer Kraft gesetzt wird. Insofern gewährleistet die elastische Entkopplung ein zuverlässiges Abdichten von Abdichtrand und der mindestens einen Dichtlippe.

Die elastische Entkopplung kann dadurch erreicht werden, dass ein hinreichend elastisches Material in Kombination mit einem ausreichenden Abstand zwischen Dichtlippe und Abdichtrand bzw. Dichtlippe und benachbarter Dichtlippe gewählt wird.

In einer weiteren Ausführungsform ist das Pilzventil ausgelegt, in einen Kraftstoffbehälter eines Kraftfahrzeugs eingesetzt zu werden. Hierbei kann es in der Zuleitung zwischen dem Haupttank und dem Beruhigungstopf positioniert sein. Dazu besteht es aus einem Material, das zunächst gegenüber Kraftstoffen wie Benzin oder Diesel hinreichend inert ist. Weiterhin muss es zur Gewährleistung der Dichtigkeit hinreichend weich sein und sollte durch Spritzgießen herstellbar sein. Als Material kann insofern Silikon gewählt werden.

Die Ausführungsform des letzten Absatzes führt bei Kraftfahrzeugen dazu, dass die Tankanzeige bei geringen Füllmengen im Kraftstofftank zuverlässiger angegeben wird und die vorhandene Restmenge an Kraftstoff sicherer genutzt werden kann. Befindet sich im Beruhigungstopf nur noch wenig Kraftstoff, z.B. 5 Liter oder weniger, und wird diese Restkraftstoffmenge gemessen, so beeinflusst die Dichtigkeit der im einleitenden Teil der Beschreibung genannten Durchlassöffnung mit ihrem Pilzventil die Genauigkeit des Messwerts. Dieser Messwert, der dem Fahrer von der Bordelektronik üblicherweise in Litern oder in (Rest-) Kilometern (die noch gefahren werden können) angegeben wird, um anzuzeigen, dass bald getankt werden muss, kann nämlich bedingt durch ein undichtes Pilzventil mit einem erheblichen Fehler behaftet sein. Ein Fahrer, der dem von der Bordelektronik angezeigten Messwert vertraut und weiterfährt, weil er die angezeigte Restmenge als sicher verfügbar ansieht, kann auf diese Weise mit seinem Fahrzeug liegen bleiben. Das mit einer Dichtlippe ausgestattete Pilzventil verbessert die Dichtigkeit des Beruhigungstopfs, führt zu einer zuverlässigeren Restmengenangabe durch die Bordelektronik und zu einer größeren Kundenzufriedenheit.

Ausführungsformen des Pilzventils sehen ferner zwischen einer und vier Dichtlippen vor. Hierbei soll hervorgehoben werden, dass mit einer Dichtlippe im Rahmen dieser Erfindungsdarstellung nicht der abdichtende äußere Rand des Ventilschirms bzw. der Abdichtrand des Pilzventils verstanden werden soll. Da die Dichtlippen von der Flüssigkeit hintereinander passiert werden müssen, steigern die mehreren Dichtlippen die Dichtigkeit mehrfach.

Weitere Ausführungsformen sehen vor, dass die Dichtlippen konzentrisch zum Schaft und insofern kreisrund ausgebildet sind.

Weitere Varianten des Pilzventils sehen vor, dass der Ventilschirm wellenförmig ausgebildet ist. Diese Ausbildung unterstützt die oben diskutierte elastische Entkopplung einer Dichtlippe von einem benachbarten umlaufenden Abdichtrand des Ventilschirms und/oder von einer benachbarten Dichtlippe und steigern insofern die Zuverlässigkeit der Abdichtung nochmals.

Ein Beispiel für ein Pilzventil kann eine im Wesentlichen stegförmige Dichtlippe vorweisen. Der Ventilschirm mit Dichtlippe(n) wird dadurch T-förmig ausgebildet, wodurch eine höhere Flächenpressung auf die Dichtlippen erreicht wird. Durch Annäherung der Dichtlippenform an die T-Form kann man die Schließkraft der Dichtlippe gezielt erhöhen, und zwar unabhängig von der Dichtigkeit der benachbarten Dichtlippen.

Ausführungsformen des Pilzventils können ferner vorsehen, dass der Ventilschirm über eine zentrale Mulde verfügt. Der aus einem elastischen Material bestehende Muldenrand kann sich dann an den Rand der abzudichtenden Öffnung anlegen und darüber eine zusätzliche abdichtende Kontaktstelle ausbilden. Die Mulde kann symmetrisch zum Schaft verlaufen.

Ein zweiter Aspekt der Erfindung bezieht sich auf einen Beruhigungstopf für den Kraftstoffbehälter eines Kraftfahrzeugs, der das oben beschriebene Pilzventil aufweist. Das Pilzventil kann in eine im Boden des Beruhigungstopfs befindliche durchgehende Öffnung eingebracht sein, über die Kraftstoff vom Haupttank in den Beruhigungstopf gefördert wird.

Weitere Merkmale und Vorteile der beanspruchten Erfindung werden aus der folgenden detaillierten Beschreibung mit Bezug auf die beigefügten Zeichnungen erkennbar die nachfolgend als nicht beschränkende Beispiele angegeben sind. Hierbei soll die Benutzung von Bezugszeichen in den Figuren nicht dahingehend verstanden werden, dass die Bezugszeichen den Schutzumfang der beanspruchten Erfindung einschränken sollen.
Es zeigt:
- Fig. 1: einen Schnitt durch eine erste Ausführungsform eines Pilzventils,
- Fig. 2: einen Schnitt durch eine zweite Ausführungsform eines Pilzventils,
- Fig. 3: einen Schnitt durch eine dritte Ausführungsform eines Pilzventils.

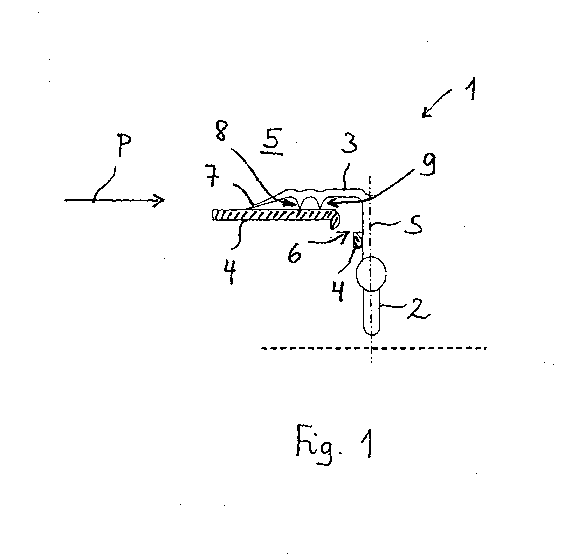

Figur 1 zeigt ein Pilzventil 1, das aus einem Schaft 2 und einem hierzu konzentrischen Ventilschirm 3 aus Polyethylen besteht, im Schnitt entlang der durch den Schaft 2 verlaufenden Symmetrieachse S. Das Pilzventil 1 dient dazu, eine im Boden 4 eines Behälters 5 befindliche Einlass-/Auslassöffnung 6 abzudichten, durch die Flüssigkeit von unten in den Behälter 5 ein- bzw. ausströmen kann. Bei dem Behälter 5 kann es sich um einen im Inneren eines Kraftstofftanks angeordneten Beruhigungstopf handeln.

Der Ventilschirm 3 besitzt zum Abdichten einen Abdichtrand 7. Dieser Abdichtrand umgibt den Schaft 6 kreisförmig und sorgt dafür, dass bei einem geeigneten Druck auf den Abdichtrand 7 die Einlass-/Auslassöffnung 6 abgedichtet wird.

Zusätzlich zum Abdichtrand 7 besitzt der Ventilschirm 3 auf seiner Unterseite, d.h. auf der dem Behälterboden 4 zugewandten Seite, zwei Dichtlippen 8 bzw. 9. Wird bedingt durch feste Bestandteile in der Flüssigkeit der Abdichtrand 7 lokal angehoben und ist dadurch undicht, so wird die Einlass-/Auslassöffnung 6 weiterhin durch die zwei Dichtlippen 8 und 9 abgedichtet. Eine in Richtung des Pfeils P strömende Flüssigkeit müsste insofern trotz des angehobenen Abdichtrands 7 zwei weitere Dichtungen in Gestalt der Dichtlippen 8 und 9 passieren. Da die Dichtlippen 8, 9 konzentrisch zum Schaft 2 verlaufen, stellt die gezeigte Anordnung von Dichtung eine Art Hintereinanderschaltung von Dichtungen dar, durch die die Leckrate erheblich gemindert wird.

Die Oberseite des Ventilschirms 3 ist nicht konvex geformt sondern wellenförmig ausgebildet. Durch die wellenartige Form wird die elastische bzw. mechanische Entkopplung der einzelnen Dichtbereiche unterstützt. Hierbei befindet sich jeweils unterhalb eines Wellentals der Oberseite des Ventilschirms 3 eine Dichtlippe 8, 9. Die genannte Entkopplung sorgt dafür, dass bei einem durch feste Bestandteile wie zum Beispiel Sandkörner angehobenen Abdichtrand 7 die benachbarte Dichtlippe 8 oder die weitere Dichtlippe 9 nicht ebenfalls angehoben wird. Ebenso bedingt dies, dass bei zusätzlich festen Bestandteilen unter der äußeren Dichtlippe 8 die innere Dichtlippe 9 nicht ebenfalls angehoben wird.

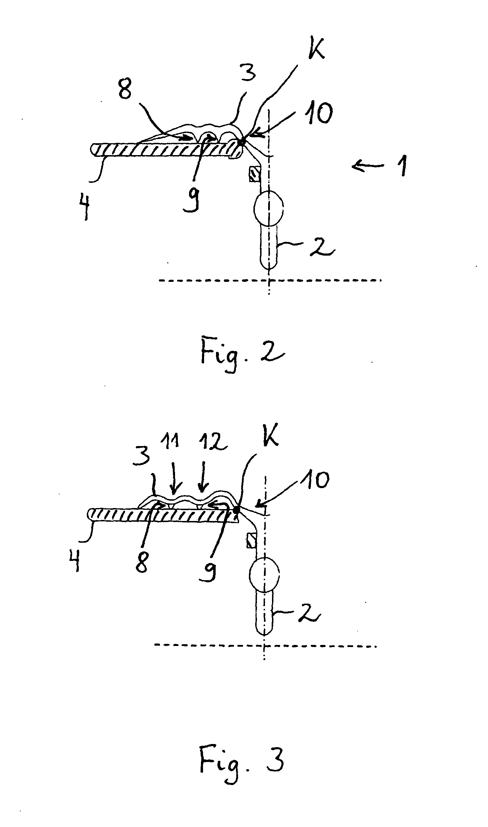

Die Figur 2 zeigt eine weitere Ausführungsform eines Pilzventils 1, die im Vergleich zur Ausführungsform der Figur 1 über einen Ventilschirm 3 mit einer zentralen Mulde 10 verfügt. Der Mulde 10 steht damit in Kontakt mit dem Rand der Einlass-/Auslassöffnung 6. Die Kontaktstelle K dichtet die Einlass-/Auslassöffnung 6 zusätzlich ab.

Die Figur 3 zeigt ebenfalls eine Ausführungsform mit zentraler Mulde 10 und einer Kontaktstelle K zwischen dem Muldenrand und dem Rand der Einlass-/Auslassöffnung 6. Der Ventilschirm 3 ist noch ausgeprägter wellenförmig und verfügt über stegförmige Dichtlippen 8 bzw. 9. Die in diesem Bereich T-förmige Ausbildung des Ventilschirms 3 unterstützt die elastische Entkopplung von Abdichtrand 7 und Dichtlippen 8, 9.

### Bezugszeichenliste

- 01: Pilzventil
- 02: Schaft
- 03: Ventilschirm
- 04: Boden
- 05: Behälter
- 06: Einlass-/Auslassöffnung
- 07: Abdichtrand
- 08: Dichtlippe
- 09: Dichtlippe
- 10: Mulde
- 11: Wellental
- 12: Wellental

- P: Pfeil
- K: Kontaktstelle

## Patentansprüche

1. Pilzventil (1), umfassend einen Ventilschirm (3) mit damit verbundenem Schaft (2), wobei auf der Unterseite des Ventilschirms zwischen seinem Abdichtrand (7) und dem Schaft mindestens eine Dichtlippe (8,9) ausgebildet ist, wobei die Elastizität des Ventilschirms derart gewählt ist, dass die Dichtlippe
a) vom benachbarten umlaufenden Abdichtrand des Ventilschirms, und/oder
b) von einer benachbarten Dichtlippe elastisch entkoppelt ist.

2. Pilzventil nach Anspruch 1, ausgelegt zum Einsatz in einen Kraftstoffbehälter eines Kraftfahrzeugs.

3. Pilzventil nach einem der vorherigen Ansprüche, bei dem zwischen einer und vier Dichtlippen vorgesehen sind.

4. Pilzventil nach einem der vorherigen Ansprüche, bei dem die Dichtlippen konzentrisch zum Schaft ausgebildet sind.

5. Pilzventil nach einem der vorherigen Ansprüche, bei dem der Ventilschirm wellenförmig ausgebildet ist.

6. Pilzventil nach einem der vorherigen Ansprüche, bei dem die Dichtlippe im Wesentlichen stegförmig ist.

7. Pilzventil nach einem der vorherigen Ansprüche, bei dem der Ventilschirm über eine zentrale Mulde (10) verfügt.

8. Beruhigungstopf (5) für einen Kraftstoffbehälter eines Kraftfahrzeugs, aufweisend ein Pilzventil nach einem der vorherigen Ansprüche.

## Claims

1. Mushroom valve (1), comprising a valve shield (3) equipped with a shaft (2) connected with it, wherein on the under part of the valve shield between its sealing border (7) and the shaft there is at least one sealing lip (8, 9) arranged, wherein the resilience of the valve shield is chosen so that the sealing lip:
a) is flexibly uncoupled from the contiguous circumferential sealing border of the valve shield and / or
b) from the contiguous sealing lip.

2. Mushroom valve according to claim 1, designed for the use as a fuel tank in a motor vehicle.

3. Mushroom valve according to one of the previous claims, wherein a number of one to four sealing lips is arranged.

4. Mushroom valve according to one of the previous claims, wherein the sealing lips are concentrically designed to the shaft.

5. Mushroom valve according to one of the previous claims, wherein the valve shield is undulated.

6. Mushroom valve according to one of the previous claims, wherein the valve shield is equipped with a central cavity (10).

7. Slowdown box (5) for a fuel tank of a motor vehicle, being equipped with a mushroom valve according to one of the previous claims.

8. Slowdown box (5) for a fuel tank in a motor vehicle, being equipped with a mushroom valve according to one of the previous claims.

## Revendications

1. Soupape-champignon (1), comprenant une soupape de protection (3) liée à une manche (2) où au moins une lèvre épaisse (8, 9) s'est développée sur la face inférieure de la soupape de protection entre sa bordure étanche (7) et la manche, par lequel l'élasticité de la soupape de protection est tellement sollicitée que la lèvre épaisse se détache:
a) de la bordure circulaire voisine de la soupape de protection, et/ou
b) de la lèvre épaisse voisine.

2. Soupape-champignon selon revendication 1, mise en marche dans un réservoir de carburant d'un véhicule.

3. Soupape-champignon selon une des revendications précédentes, sur laquelle entre un à quatre lèvres épaisses sont prévues.

4. Soupape-champignon selon une des revendications précédentes, sur laquelle les lèvres épaisses sont formées de telle sorte qu'elles sont concentriques à la manche.

5. Soupape-champignon selon une des revendications précédentes, sur laquelle la soupape de protection a été développée en forme ondulée.

6. Soupape-champignon selon une des revendications précédentes, sur laquelle la lèvre épaisse est principalement en forme de passerelle.

7. Soupape-champignon selon une des revendications précédentes, dont la soupape de protection possède une cuvette centrale (10).

8. Une marmite d'apaisement (5) pour un récipient à carburant d'un véhicule, présentant une soupape en forme de champignon selon une des revendications précédentes.
